# FASCICULE DE BREVET EUROPEEN

(11) **EP 2 525 993 B1**
(45) Date de publication et mention de la délivrance du brevet: **06.05.2015**
(21) Numéro de dépôt: 10787001.6
(22) Date de dépôt: 04.11.2010
(51) Int. Cl.: B60K 37/04

(54) **ELEMENT DECORATIF, TABLEAU DE BORD ET PROCEDE DE FABRICATION D'UN ELEMENT DECORATIF**
ZIERELEMENT, ARMATURENBRETT UND HERSTELLUNGSVERFAHREN FÜR EIN ZIERELEMENT
DECORATIVE ELEMENT, DASHBOARD, AND METHOD FOR MANUFACTURING A DECORATIVE ELEMENT

(30) Priorité: 23.01.2010 DE 102010005496
(43) Date de publication de la demande: 28.11.2012
(73) Titulaire: Johnson Controls Technology Company, Holland, MI 49423 (US)
(72) Inventeur: VIGOUR, Jean-Pierre, F-95310 Saint Ouen L' Aumône (FR); GUILLAUMINAUD, Frédéric, F-95800 Cergy le Haut (FR)
(74) Mandataire: Schwöbel, Thilo K.
(86) Numéro de dépôt international: PCT/EP2010/006709
(87) Numéro de publication internationale: WO 2011/088858

(56) Documents cités:
- EP-A1- 0 386 986
- EP-A1- 0 598 706
- DE-A1- 2 930 769
- DE-U1-202005 007 720
- FR-A1- 2 837 135
- US-A- 4 548 843
- US-A- 6 066 225

## Description

La présente invention concerne un tableau de bord de véhicule automobile comprenant au moins un élément décoratif, et un procédé de fabrication d'un élément décoratif.

Des éléments décoratifs sont connus, notamment pour les tableaux de bord et notamment pour de véhicules automobiles.

Par ailleurs, il est connu de prévoir un chromage sur un élément destiné à être attaché à un véhicule, notamment un véhicule automobile. Un tel élément est - par exemple - connu de la publication US 6279974 B1. Le document DE 29 30 769 A1 divulgue le préambule de la revendication 1.

Un tel élément prévu pour un chromage prévoit que la partie à être chromé est d'abord fabriquée, qu'en suite l'étape de chromage est effectuée, et que pendant une étape ultérieure, une telle partie chromée est attaché à une partie non-chromée.

Un tel procédé de fabrication a pour conséquence que des tolérances d'assemblage peuvent avoir un effet négatif à l'aspect esthétique d'un tel élément décoratif.

La présente invention a notamment pour but de pallier aux inconvénients de l'art connu, et notamment ceux cités ci-dessus, et a également pour but de proposer un élément décoratif ainsi qu'un tableau de bord d'un véhicule qui peut être réalisé de manière simple et efficace et qui a un aspect esthétique avantageux.

Suivant l'invention, ce but est atteint par un tableau de bord de véhicule automobile selon la revendication 1.

De par une telle réalisation de l'élément décoratif, il est avantageusement possible de réduire ou de supprimer les tolérances d'assemblages entre la première partie de l'élément décoratif et la deuxième partie de l'élément décoratif. Ceci permet d'améliorer l'aspect esthétique de l'élément décoratif notamment lorsque la deuxième partie de l'élément décoratif est illuminée.

Un perfectionnement préféré de l'invention réside dans le fait que la première partie de l'élément décoratif et la deuxième partie de l'élément décoratif sont réalisé par l'intermédiaire d'un moulage par injection à deux étapes.

Selon un mode de réalisation préféré de l'élément décoratif selon la présente invention, la première partie de l'élément décoratif et la deuxième partie de l'élément décoratif sont réalisé par l'intermédiaire d'un moulage par injection à deux composantes.

De par de telles réalisations de l'élément décoratif inventif, il est avantageusement possible de minimiser les efforts pour fabriquer l'élément décoratif et de réduire au maximum les tolérances d'assemblage.

Un perfectionnement préféré de l'invention réside dans le fait que le premier matériau comprend
- le polyamide (PA), et/ou
- l'acrylonitrile butadiène styrène (ABS), et/ou
- Le polycarbonate + l'acrylonitrile butadiène styrène (PC - ABS), et/ou
- le polycarbonate (PC).
ou une composition de ces matériaux.

De par une telle réalisation du tableau de bord inventif, il est possible de rendre la première partie de l'élément décoratif susceptible d'être couverte d'une couche de décoration étant une couche de chrome.

Selon un mode de réalisation préféré de l'élément décoratif selon la présente invention, le deuxième matériau comprend le polyméthacrylate de méthyle (PMMA) ou Polycarbonate (PC) en variante de transparence ou diffusante.

De par une telle réalisation du tableau de bord inventif, il est avantageusement possible de prévoir la deuxième partie de l'élément décoratif telle que la deuxième partie n'est pas couverte de la couche de décoration.

Selon un mode de réalisation préféré de l'élément décoratif selon la présente invention, le premier matériau est choisi d'être facilement couvert de la couche de décoration lors d'un processus d'application de la couche de décoration (type galvanoplastie) et que le deuxième matériau est choisi tel que lors du processus d'application de la couche de décoration, le deuxième matériau n'est pas couvert de la couche de décoration.

La présente invention concerne un tableau de bord de véhicule automobile comprenant au moins un élément décoratif inventif.

De par une telle réalisation du procédé d'affichage, il est avantageusement possible d'augmenter le niveau de sécurité d'un véhicule car l'utilisateur peut se concentrer sur les informations importantes et n'est pas distrait des informations principales par une multitude d'informations présentées et/ou par des endroits différents dés informations.

Selon l'invention, le tableau de bord comprend un moyen d'affichage, le moyen d'affichage ayant une zone d'affichage, et la zone d'affichage étant entouré par l'élément décoratif.

De par une telle réalisation du procédé d'affichage, il est avantageusement possible de réaliser un affichage ayant un aspect esthétique avantageux.

La présente invention concerne par ailleurs un procédé de fabrication d'un élément décoratif selon la revendication 7.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue de section schématique d'un élément décoratif selon une première variante de la présente invention,
la figure 2 est une vue de section schématique d'un élément décoratif selon une deuxième variante de la présente invention,
la figure 3 est une vue de perspective d'un élément décoratif selon la présente invention, et
la figure 4 est une vue schématique d'un dispositif d'affichage d'un tableau de bord selon la présente invention.

### DESCRIPTION DES DESSINS

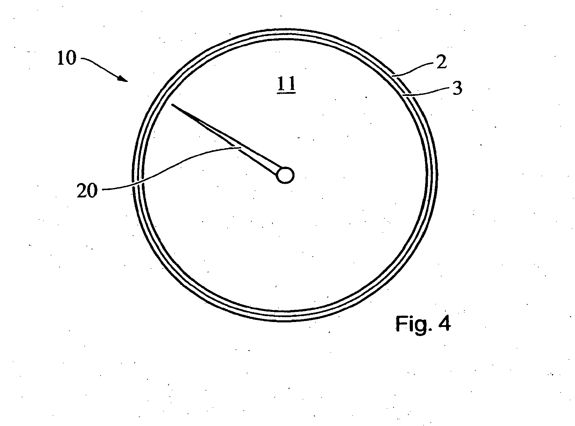

Comme le montre la figure 4 du dessin annexé, un dispositif d'affichage 10 selon la présente invention comprend une surface d'affichage 11, notamment en forme de cadran. La figure 4 du dessin montre le dispositif d'affichage 10 comme un utilisateur du dispositif d'affichage 10 le voit, notamment comme un conducteur du véhicule dans lequel le dispositif d'affichage 10 est monté. Il est possible selon la présente invention qu'une aiguille 20 est prévue pour l'affichage - par exemple - d'une grandeur comme la vitesse du véhicule ou du nombre de tours du moteur du véhicule.

Dans l'exemple montré dans la figure 4, le dispositif d'affichage 10 fait partie d'un tableau de bord du véhicule et la surface d'affichage 11 du dispositif d'affichage 10 est entouré ou environné par un élément décoratif 1, l'élément décoratif 1 comprenant une première partie 2 et une deuxième partie 3.

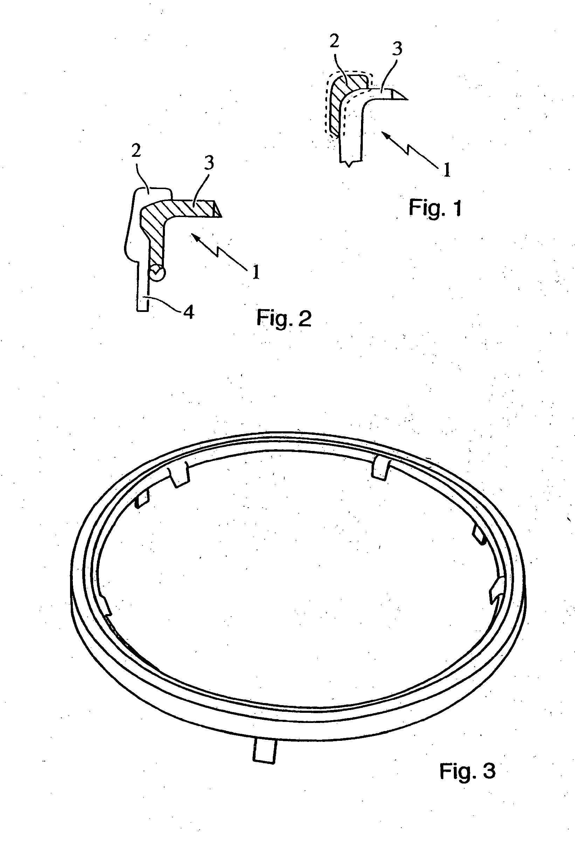

Les figures 1 et 2 montrent une vue schématique de section de l'élément décoratif 1 selon une première variante (figure 1) de la présente invention et selon une deuxième variante (figure 2) de la présente invention. Comme décrit, l'élément décoratif 1 comprend une première partie 2 de l'élément décoratif 1 et une deuxième partie 3 de l'élément décoratif 1. La première partie 2 de l'élément décoratif 1 comprend un premier matériau et la deuxième partie de l'élément décoratif 1 comprend un deuxième matériau. Le premier matériau est différent du deuxième matériau quant à ses propriétés physiques et/ou chimiques.

Par exemple, le premier matériau comprend
- le polyamide (PA), et/ou
- l'acrylonitrile butadiène styrène (ABS), et/ou
- Le polycarbonate + l'acrylonitrile butadiène styrène (PC - ABS), et/ou
- le polycarbonate (PC).
ou une composition de ces matériaux.

Il est aussi possible que le premier matériau comprend une composition de plusieurs de ces matériaux.

Par exemple, le deuxième matériau comprend le polyméthacrylate de méthyle (PMMA) ou Polycarbonate (PC) en variante de transparence ou diffusante..

Le premier matériau est de préférence un matériau ayant une grande susceptibilité qu'une couche de décoration (indiquée dans la figure 1 avec une ligne en pointillés) soit déposée sur une surface extérieure de la première partie.

Le deuxième matériau est de préférence un matériau sur lequel une couche de décoration ne tienne pas, c'est à dire, lorsque l'élément décoratif 1 (avant d'être soumis au processus d'application de la couche de décoration) est traité de façon à réaliser la couche de décoration, la couche de décoration n'est pas déposée sur une surface de la deuxième partie (ou le deuxième matériau) de l'élément décoratif 1.

Dans la figure 2, la première partie 2 comprend une partie dite de pied 4 qui peut servir - par exemple - à tenir l'élément décoratif 1 lors de l'étape d'application de la couche de décoration, notamment un processus de chromage.

Dans toutes les variantes de la présente invention, le deuxième matériau est de préférence un matériau qui est transparent. Par ailleurs selon la présente invention, il est possible (et représenté dans les figures 1 et 2) que la première partie 2 est localisé plus à l'extérieur de la deuxième partie 3 lorsque l'élément décoratif 1 est courbé, et notamment formé de façon ronde. Bien évidemment il est également possible que la deuxième partie 3 est localisé plus à l'extérieur de la première partie 2 lorsque l'élément décoratif 1 est courbé.

Il est préféré que les deux partiels 2, 3 de l'élément décoratif 1 sont fabriquées par l'intermédiaire d'un moulage par injection à deux étapes ou par l'intermédiaire d'un moulage par injection à deux composante. Il est également possible que l'élément décoratif est réalisé par l'intermédiaire d'un moulage par injection à trois (ou plus d') étapes ou par l'intermédiaire d'un moulage par injection à trois (ou plus de) composante.

La figure 3 montre l'élément décoratif 1 dans une représentation de perspective.

### Liste des signes de référence

- 1: élément décoratif
- 2: première partie de l'élément décoratif
- 3: deuxième partie de l'élément décoratif
- 10: dispositif d'affichage
- 11: surface d'affichage
- 20: aiguille du dispositif d'affichage

## Revendications

1. Tableau de bord de véhicule automobile comprenant au moins un élément décoratif (1), l'élément décoratif (1) comprenant une première partie (2) et une deuxième partie (3), la première partie (2) de l'élément décoratif (1) étant réalisé d'un premier matériau non-transparent, le premier matériau portant une couche de décoration, la deuxième partie (3) de l'élément décoratif (1) étant réalisé d'un deuxième matériau transparent, **caractérisé en ce que** le tableau de bord comprend un dispositif d'affichage (10), le dispositif d'affichage (10) ayant une zone d'affichage (11), et la zone d'affichage (11) étant entouré par l'élément décoratif (1), et que la première partie (2) de l'élément décoratif (1) et la deuxième partie (3) de l'élément décoratif (1) sont réalisées d'une seule pièce, la couche de décoration étant une couche de chrome.

2. Tableau de bord de véhicule automobile selon la revendication 1, **caractérisé en ce que** la première partie (2) de l'élément décoratif (1) et la deuxième partie (3) de l'élément décoratif (1) sont réalisé par l'intermédiaire d'un moulage par injection à deux étapes.

3. Tableau de bord de véhicule automobile selon l'une quelconque des revendications précédentes, **caractérisé en ce que** la première partie (2) de élément décoratif (1) et la deuxième partie (3) de l'élément décoratif (1) sont réalisé par l'intermédiaire d'un moulage par injection à deux composantes.

4. Tableau de bord de véhicule automobile selon l'une quelconque des revendications précédentes, **caractérisé en ce que** le premier matériau comprend
- - le polyamide (PA), et/ou
- - l'acrylonitrile butadiène styrène (ABS), et/ou
- - Le polycarbonate + l'acrylonitrile butadiène styrène (PC - ABS), et/ou
- - le polycarbonate (PC).
ou une composition de ces matériaux.

5. Tableau de bord de véhicule automobile selon l'une quelconque des revendications précédentes, **caractérisé en ce que** le deuxième matériau comprend le polyméthacrylate de méthyle (PMMA) ou Polycarbonate (PC) en variante de transparence ou diffusante.

6. Tableau de bord de véhicule automobile selon l'une quelconque des revendications précédentes, **caractérisé en ce que** le premier matériau est choisi d'être facilement couvert de la couche de décoration lors d'un processus d'application de la couche de décoration et que le deuxième matériau est choisi tel que lors du processus d'application de la couche de décoration, le deuxième matériau n'est pas couvert de la couche de décoration.

7. Procédé de fabrication d'un élément décoratif (1) pour l'usage liée à un tableau de bord de véhicule automobile selon l'une quelconque des revendications 1 à 6, **caractérisé en ce que**
- - dans une première étape du procédé, la première partie (2) et la deuxième partie (3) sont réalisées par l'intermédiaire d'un moulage par injection à deux étapes ou par l'intermédiaire d'un moulage par injection à deux composantes, et que
- - dans une deuxième étape du procédé, la couche de décoration est appliquée sélectivement sur une surface de la première partie (2).

## Patentansprüche

1. Kraftfahrzeug-Armaturenbrett, das mindestens ein Zierelement (1) aufweist, wobei das Zierelement (1) einen ersten Teil (2) und einen zweiten Teil (3) aufweist, wobei der erste Teil (2) des Zierelements (1) aus einem ersten nicht-transparenten Material ausgeführt ist, wobei das erste Material eine Zierschicht trägt, wobei der zweite Teil (3) des Zierelements (1) aus einem zweiten transparenten Material ausgeführt ist, **dadurch gekennzeichnet, dass** das Armaturenbrett eine Anzeigevorrichtung (10) aufweist, wobei die Anzeigevorrichtung (10) einen Anzeigebereich (11) hat, und wobei der Anzeigebereich (11) von dem Zierelement (1) umgeben ist, und dadurch, dass der erste Teil (2) des Zierelements (1) und der zweite Teil (3) des Zierelements (1) in einem Stück ausgeführt sind, wobei die Zierschicht eine Chromschicht ist.

2. Kraftfahrzeug-Armaturenbrett nach Anspruch 1, **dadurch gekennzeichnet, dass** der erste Teil (2) des Zierelements (1) und der zweite Teil (3) des Zierelements (1) mittels Spritzguss in zwei Schritten ausgeführt werden.

3. Kraftfahrzeug-Armaturenbrett nach einem der vorhergehenden Ansprüche, **dadurch gekennzeichnet, dass** der zweite Teil (2) des Zierelements (1) und der zweite Teil (3) des Zierelements (1) mittels eines Zweikomponenten-Spritzgusses ausgeführt werden.

4. Kraftfahrzeug-Armaturenbrett nach einem der vorhergehenden Ansprüche, **dadurch gekennzeichnet, dass** das erste Material
- Polyamid (PA) und/oder
- Acrylnitril-Butadien-Styrol (ABS) und/oder
- Polycarbonat + Acrylnitril-Butadien-Styrol (PC - ABS) und/oder
- Polycarbonat (PC)
oder eine Zusammensetzung dieser Materialien aufweist.

5. Kraftfahrzeug-Armaturenbrett nach einem der vorhergehenden Ansprüche, **dadurch gekennzeichnet, dass** das zweite Material Polymethylmethacrylat (PMMA) oder Polycarbonat (PC) in einer Transparenz- oder Diffusionsvariante aufweist.

6. Kraftfahrzeug-Armaturenbrett nach einem der vorhergehenden Ansprüche, **dadurch gekennzeichnet, dass** das erste Material so gewählt wird, dass es während eines Prozesses zum Aufbringen der Zierschicht leicht von der Zierschicht bedeckt werden kann, und dadurch, dass das zweite Material so gewählt wird, dass das zweite Material während des Prozesses zum Aufbringen der Zierschicht nicht von der Zierschicht bedeckt wird.

7. Herstellungsverfahren für ein Zierelement (1) zur Verwendung in Verbindung mit einem Kraftfahrzeug-Armaturenbrett nach irgendeinem der Ansprüche 1 bis 6, **dadurch gekennzeichnet, dass**
- in einem ersten Schritt des Verfahrens der erste Teil (2) und der zweite Teil (3) mittels eines Spritzgusses in zwei Schritten oder mittels eines Zweikomponenten-Spritzgusses ausgeführt werden, und dadurch, dass
- in einem zweiten Schritt des Verfahrens die Zierschicht selektiv auf eine Oberfläche des ersten Teils (2) aufgebracht wird.

## Claims

1. Dashboard of a motor vehicle comprising at least one decorative element (1), said decorative element (1) comprising a first part (2) and a second part (3), the first part (2) of the decorative element (1) being made of a first non-transparent material, the first material having a decorative layer, the second part (3) of the decorative element (1) being made of a second transparent material, **characterised in that** the dashboard comprises a display device (10), said display device (10) having a display zone (11) that is surrounded by the decorative element (1) and that the first part (2) of the decorative element (1) and the second part (3) of the decorative element (1) are made in one piece, the decorative layer being a chrome layer.

2. Dashboard of a motor vehicle according to claim 1, **characterised in that** the first part (2) of the decorative element (1) and the second part (3) of the decorative element (1) are produced by means of a two-stage injection moulding process.

3. Dashboard of a motor vehicle according to any one of the preceding claims, **characterised in that** the first part (2) of the decorative element (1) and the second part (3) of the decorative element (1) are produced by means of injection moulding as two components.

4. Dashboard of a motor vehicle according to any one of the preceding claims, **characterised in that** the first material comprises
- polyamide (PA), and / or
- acrylonitrile butadiene styrene (ABS), and / or
- polycarbonate + acrylonitrile butadiene styrene (PC - ABS), and / or
- polycarbonate (PC)
or a composition of these materials.

5. Dashboard of a motor vehicle according to any one of the preceding claims, **characterised in that** the second material comprises polymethyl methacrylate (PMMA) or polycarbonate (PC) as a transparent or diffusing alternative.

6. Dashboard of a motor vehicle according to any one of the preceding claims, **characterised in that** the first material is selected such that it can be coated easily by the decorative layer during the process to apply the decorative layer, and that the second material is selected such that, during the process to apply the decorative layer, the second material is not covered with the decorative layer.

7. Method of manufacturing a decorative element (1) for use in connection with a dashboard of a motor vehicle according to any one of the claims 1 to 6, **characterised in that**
- - in a first method step, the first part (2) and the second part (3) are manufactured by means of a two-stage injection moulding process or by injection moulding as two components and that
- - in a second method step, the decorative layer is selectively applied to a surface of the first part (2).
